# EUROPEAN PATENT SPECIFICATION

(11) **EP 1 308 025 B1**
(45) Date of publication and mention of the grant of the patent: **14.12.2005**
(21) Application number: 01967387.0
(22) Date of filing: 14.09.2001
(51) Int. Cl.: H04M 11/04

(54) **ALARMING SYSTEM**
ALARMSYSTEM
SYSTEME D'ALARME

(30) Priority: 14.09.2000 FI 20002033
(43) Date of publication of application: 07.05.2003
(73) Proprietor: TeliaSonera Finland Oyj, 00510 Helsinki (FI)
(72) Inventor: HEINO, Esko, c/o Sonera Information Logistics, FIN-00051 Sonera (FI); HIETASALO, Pauli, FIN-70780 Kuopio (FI)
(74) Representative: Simmelvuo, Markku Kalevi
(86) International application number: PCT/FI2001/000801
(87) International publication number: WO 2002/023882

(56) References cited:
- WO-A1-94/22262
- WO-A1-98/47277
- CA-A- 2 275 822
- US-A- 6 104 785
- PATENT ABSTRACTS OF JAPAN & JP 09 023 287 A (NIPPON TELEGR & TELEPH CORP) 30 May 1997

## Description

The presented invention is concerned with telecommunications technology. The invention is especially concerned with a new type of method and system for the realisation of an alarm or state-change-information system into the telecommunications system.

### BACKGROUND ART

The alarm transfer of automatic surveillance systems are usually realized through circuit switched telephone networks. Previously, it was only possible to realize the alarm transfer in a fixed analog telephone network (PSTN, Public Switch Telephone Network), in which case the selection information was formed as pulses. In that case it was still complicated to transfer additional phone call specific information. The next step from pulse selection is tone frequency selection. The advantage of tone frequency selection in contrast to pulse selection is among other things the speed of selection as well as the possibility of sending additional information after the selection.

A previously known method exists for the sending of information through a telephone network between two terminals, in which method info codes (DTMF, Dual Tone Multi-Frequency) are used. The problem with using info codes is the mediation of the codes in the signal giving of telephone centrals by different manufacturers.

Also such a method is previously known, in which a modem transfer based on the shifting of frequencies is used (FSK, Frequency Shift Keying). In this case the problem is the compatibility of the modem transfer speed of the parties in the transfer.

With the ISDN-system (ISDN, Integrated Services Digital Network) and most of the mobile station systems it is possible to transfer data of the calling party along with the phone call specific signaling, from the caller s A-number. In practice this shows in the recipient s terminal as the recognition of the calling party. In the patent publication WO 00/46975, there is mentioned a method, with which the amount of data that is transferred with the connection call can be expanded depending on the area of application.

In the method, the A-number field which is to be sent with the connection call is taken advantage of for the transfer of subscriber specific information. In which case for example, in connection with the connection call, the speech channel doesn t have to be connected to transfer information, the answering of the call acts as a validation for the A-subscriber and the telephone central.

One solution for transmitting alarm signals is disclosed in the reference publication WO 98/47277. It describes a method for transmitting a detected alarm signal from a remote monitoring system. The solution is an Intelligent Network (IN) based solution. When the monitoring system detects an alarm signal, a connection-oriented communication is set-up between the remote monitoring system and a service node of a telecommunication network. The service node accesses a service database and determines a destination address corresponding to a transmitted message identifier. In more detail, the service node receives a communication which it recognises as having been made to a prestored number. In response to receipt of the A-number and the alarm identifier from the Service Control Point (SCP), the Service Data Point (SDP) returns a routeable formatted directory number (the number of the monitoring facility). The connection-oriented communication channel refers preferably to D signalling channel of the ISDN.

The reference publication US 6,104,785 describes a security system comprising sensors coupled to a monitor/control server. When the monitor/control server receives a detection signal from a sensor, it forwards the detection signal to a remote administrating and monitoring device. The remote administrating and monitoring device interprets the detection signal and generates and transmits an alarm through an alarm transmitting network e.g. to the police station.

When speaking of security and telecommunication lines of business and automatic alarm transfer systems used in these, the way in which the alarm is transferred has become a problem. Traditional terminals, in this case alarm robots, usually work in such a way that, they first, by an automatic selection, form a connection through the telecommunications network to the centralized alarm receiving system, and after receiving a recognition validation from the receiving system, they send the data of an activated alarm circuit according to a certain protocol. The used protocols are usually based either on sound frequency data transfer or actual data transfer (CCITT s speeds and data connections of the V-series).

In a method and system like the one(s) said above, the problem is the slow speed of the alarm transfer and at the same time the expensive industrial manufacturing of the structurally complicated terminals of the system. Furthermore, due to complex structure of the terminal equipment the revising and updating of the systems is difficult.

The object of this invention is to remove or at least substantially relieve said disadvantages.

### SUMMARY OF THE INVENTION

The invention is as set out in the independent claims 1 and 11, preferred forms being set out in the dependent claims. The presented invention is used in the security area for transmitting alarm information in an alarm system and for transmitting state information in a state change information system. In the invention, the alarm information is transmitted using signalling connected to the call selection, i.e. the data of the alarming circuit is transmitted as a combination of the A- and the B-numbers. With the call selection signal giving it is meant a pulse selective or tone frequency selective signal giving. Especially, the purpose of the invention is to present a new type of method and system, with which the terminal i.e. an alarm robot in the target under surveillance does not send a separate alarm data of the alarm incident, but the incident data is received as a combination of the A number of the network subscribtion of the terminal and the dialled B number that was chosen in connection with the alarm incident. This data is interpreted on the server and the alarm, a state change of the alarm circuit and/or the alarm circuit is individualized on the basis of the A and B numbers.

In the method of the invention an alarm is received to the terminal from an activated alarm circuit. External alarm circuits, i.e. alarm loops, typically indicate the alarm incidents of brake ins, fires or property technology surveillance systems. Furthermore, at least two alarm circuits are usually reserved for the function surveillance of the own terminal. Thereafter the alarm is transmitted from the terminal to the server through the telecommunication network. In the method of the invention a phone call connection is formed from the terminal to a predefined subscriber connection on the basis of the alarming alarm circuit and a phone call. Thereafter the alarm is individualizecd at the server with the A number of the network subscription of the terminal and the dialled B number.

In simple alarm transfer systems the data of the alarming loop can be transferred directly as a number selection. The condition for this function is that the system receiving the alarms is connected to a serial number, which has at least as many sub numbers as the separate alarm transfer terminals have alarm loops. In this case the alarm data can be individualized on the basis of the terminals recognition (A-number), to be sent with the server, and its loop data (the B-number selected by the terminal). The A-subscriber data is automatically transferred through the network to the B-subscriber.

In an embodiment of the invention, the method comprises the step of individualizing a state change of the alarm circuit at the server with the A number of the network subscription of the terminal and the dialled B number.

In another embodiment of the invention, the method comprises the step of individualizing the alarm circuit and the type of the alarm at the server with the A number of the network subscription of the terminal and the dialled B number.

In one embodiment of the invention an acknowledgement is sent from the server to the terminal and an acknowledgement is received at the terminal from the server for the forming of a connection between the terminal and the server. With server it is meant in this context a so called incident server, which receives all the contacts which are related to alarm incidents from the terminal, forms alarm data, analysizes alarm data and handles the further mediation of alarm data.

In one embodiment of the invention the signal giving of the call selection is formed with a tone frequency selection or pulse selection.

In one embodiment of the invention the alarm data is forwarded from the server to a database server. The database server has individual data of all alarm circuits, so that every alarm can be handled unambigously and on the basis of this information the alarm information can be targeted to precisely the right unit responsible for the alarm data. The database server determines on the basis of the A-number and B-number further informatio about the alarm i.e. where and what kind of alarm is in question about in each case. When the alarm has been individualized the further information of the alarm is forwarded to a responsible organisation.

Furthermore, the invention is concerned with a system for the realisation of an alarm system in a telecommunications system, which system comprises a telecommunications network, a terminal, from where there is a connection to the telecommunications network, an alarm circuit, from where there is a connection to the terminal, a server, from where there is a connection to the telecommunications network and a database server, from where there is a connection to the server.

The system furthermore comprises, a generator 1 in the terminal adapted to generate a B-subscriber number on the basis of the alarming alarm circuit, and means 2 in the server adapted to individualize the alarm circuit based on the A number of the network subscription of the terminal and dialled B number identifying the location of the alarming alarm circuit and the type of the alarm.

In an embodiment of the invention several alarm circuits have been connected to the system terminal, which all have an individualizing device number.

In an embodiment of the invention the telecommunications network of the system is one of the following: a public telephone network, a digital multi service network or a common european digital mobile station system and the terminal is compatible with the chosen network.

The advantage of the invention in comparison to previously known technology is, that the terminal, which receives and mediates forward the alarm information from the alarm circuits, is so simple that its commercial manufacturing is profitable. This also makes it possible to use cloned devices.

The simplicity of the terminals makes it possible, that the devices do not need to be programmed in connection with the taking use of them nor does a programming readiness have to be built into them. Because of the terminal s simplicity you can manage with a significantly smaller amount of numbers. Different clients can have the same number, but the system can individualize a contact. The server in accordance with the invention can also be easily changed, when for instance alarm circuits are added to the system or when they are removed. Furthermore, the cooperative use of the speech channel is more effectively taken advantage of in the receiving equipment when using the method in accordance with the invention.

Furthermore, with the method and system in accordance with the invention the alarm transfer can be made faster than in earlier systems. This speed is accomplished by mediating the alarm information directly in the signal giving of the call selection. Earlier the modems of the transfer path had to fit the transfer speeds and that could take half a minute, which is too long a time when speaking of for instance the delay time of burglar alarms. Correspondingly a centralized receiving systems construction becomes simpler, because individual contacts only load the system for a short period of time. Also simple automatic telephone systems and attachment routines applicable to the Internet network are possible.

The advantages are also evident in the other method of the invention, the mediation of status information in the status change information system. With this invention the status changes of several systems can be under surveillance with the connection of an advantageous and simple terminal and an alarm circuit and the state change information can be mediated in connection with the forming of a normal phone call. Application targets for this invention can be found in for instance homes, offices and engines. A simple surveillance unit can be in a car,that announces a status change, when the car has traveled a certain amount of kilometres. This data, for instance of fixed date maintenance, is automatically mediated as a call selection to the maintenance garage, after which the owner of the car in question is contacted by the garage.

### LIST OF DRAWINGS

In the following the invention is described in detail using application examples by reffering to the enclosed drawing, where
figure 1 describes a certain advantageous system in accordance with the invention, and
figures 2a, 2b and 2c describe a certain advantageous signalling flow chart of the functions of the presented invention.
figure 3 describes a concrete example of the functions of the presented invention.

### DETAILED DESCRIPTION OF THE INVENTION

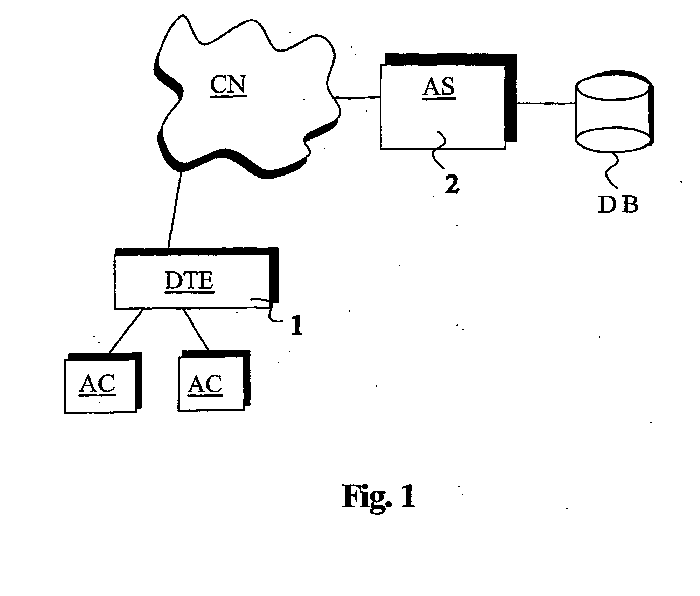

The system of figure 1 comprises a terminal DTE from where there is a connection to a telecommunications network CN. The telecommunications network CN is one of the following: a common telephone network PSTN, a digital multi service network ISDN or a common european digital mobile station system GSM. In this example of figure 1 the telecommunications network CN is a common european digital mobile station system GSM. Alarm circuits AC have been connected to the terminal DTE of figure 1. There can be several alarm circuits AC, in this example of figure 1 two are presented and they are connected to one terminal DTE. In this context said terminal DTE is called an alarm robot. The external alarm circuits or otherwise called alarm loops AC typically indicate a burglary, fire or an alarm incident of a property surveillance system.

Furthermore, a server AS and a database server DB belong to the system in accordance with figure 1, that are connected to each other and in contact to the telecommunications network CN. The database server DB contains the data of the alarm circuits of the system. The data comprises data of the location of alarm circuits, the type of alarm and data of the organisations responsible for the alarms. The server AS forms alarm information and analysizes the data on the basis of the data in the database server DB. When the more specific meaning of the alarm information has been determined, the data is mediated forward from the server AS to the faction responsible of further measures on the alarms.

A generator 1 also belongs to the system in accordance with picture 1, with which the called B-number is generated on the basis of the alarm circuit AC. Furthermore, to the system in accordance with picture 1 belongs means 2, contained in the server AS, for the individualizing of the alarm circuit on the basis of the called subscriber connection (B-number) and the calling subscriber connection (A-number). In the system in accordance with the invention, the terminal DTE forms the connection i.e. calls the server AS. It isn t until on the server that the selection becomes alarm data, after which the B-number individualizes the alarming alarm circuit. The delay of the whole process is very short, because the necessary information of the alarm can be mediated with one connection forming.

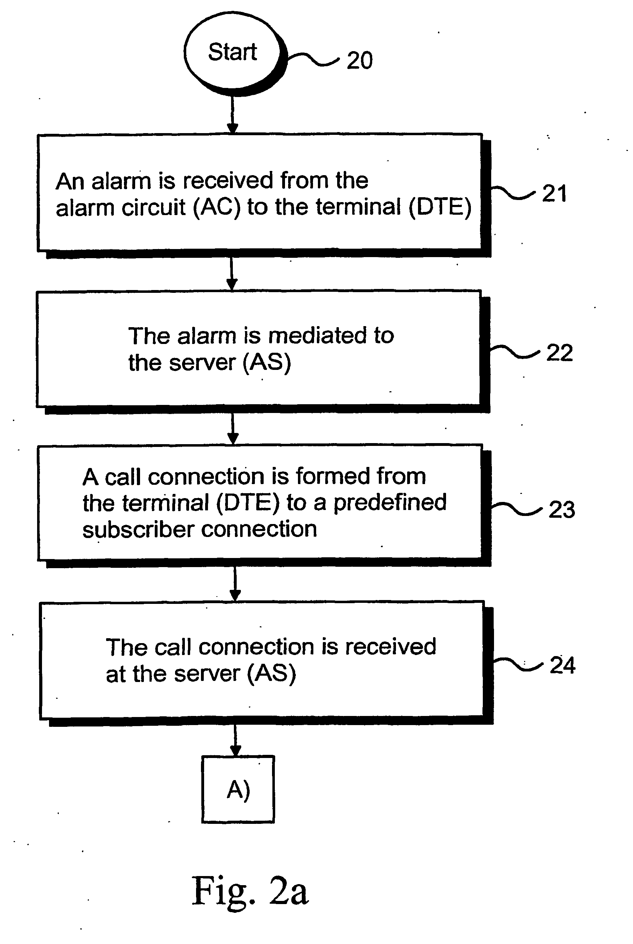

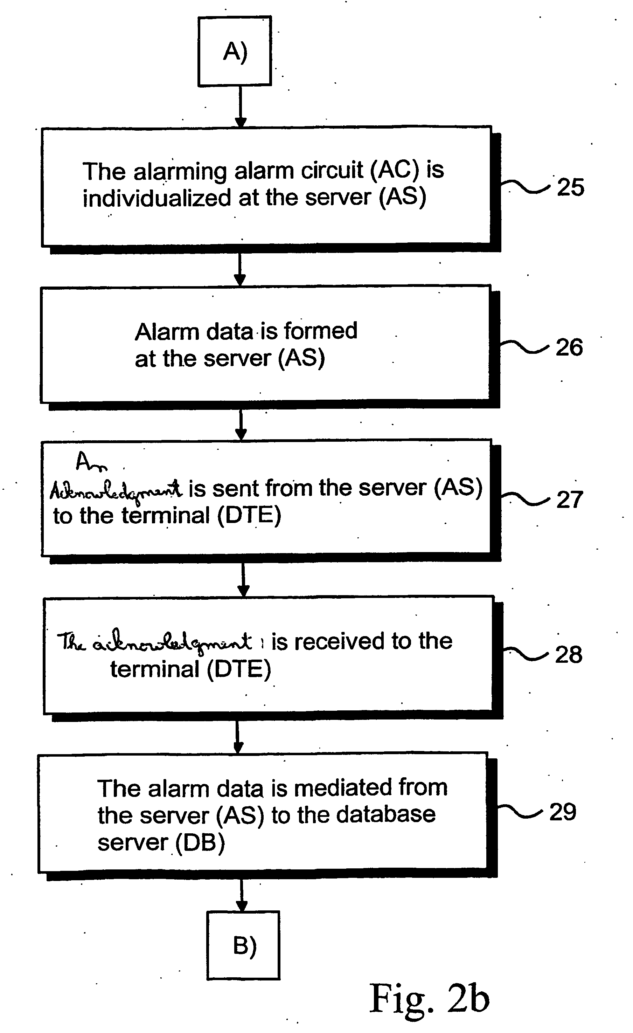

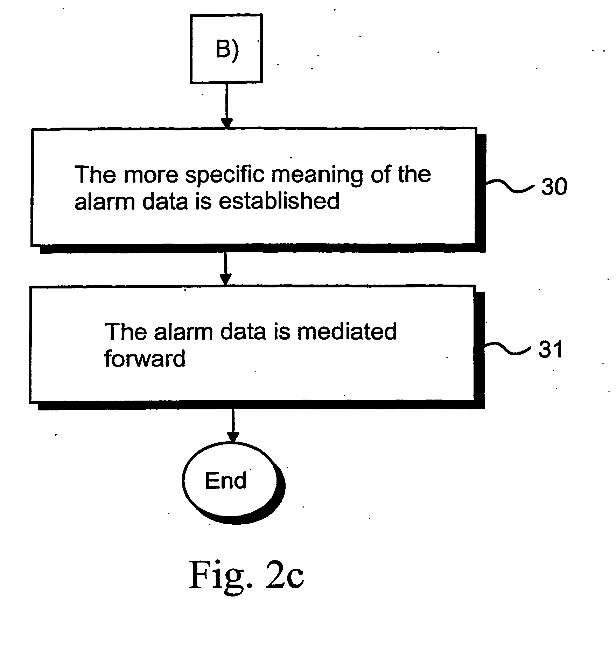

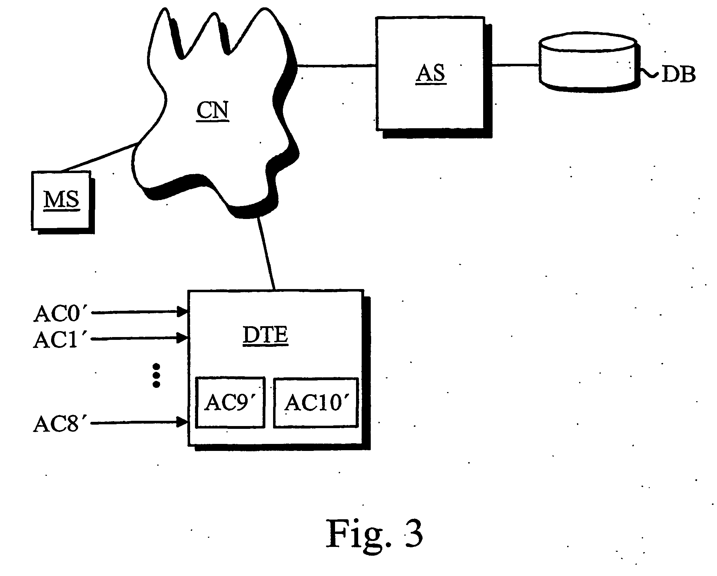

Figures 2a, 2b and 2c present a certain advantageous signalling flow chart of the functioning of the presented invention. In figure 2a, section 21, an alarm is received from the alarm circuit (AC) to the terminal (DTE). Alternatively in the process, a status change can be detected in the system connected to the terminal DTE. In section 22 an alarm or information of a status change is mediated from the terminal DTE to the server AS through the telecommunications network CN. After which a call connection is formed from the terminal DTE to a predefined subscriber connection on the basis of the alarming alarm circuit AC or the status of the changed system, section 23. In section 24 a call connection is received with the server AS to a chosen subscriber connection and in figure 2b, section 25, the alarming alarm circuit AC or the system is individualized with the server AS on the basis of the subscriber connection and the calling terminal DTE. After this, alarm data or status change data in accordance with the status information is formed with the server AS in figure 2b, section 26, by connecting the subscriber number of the network connection in contact with the terminal DTE and the device number (B-number) of the alarming alarm circuit AC or the changed system. Furthermore, in figure 2b, section 27, a validation is sent from the server AS to the terminal DTE. In section 28, a validation is received to the terminal DTE from the server AS for the formed connection between the terminal DTE and the server AS. In section 29 alarm data or data of a status change is mediated from the server AS to the database server DB. In figure 3c, section 30, the more specific meaning of the alarm data or the status change data is tried to determine on the basis of the subscriber number (A-number) and the alarming alarm circuit s AC mark (B-number) or the changed system s device number (B). In section 31 the alarm data or the data of a status change is mediated forward.

Figure 3 presents a certain concrete example of the functioning of the presented information. In figure 3 the simple terminal DTE with 10 alarm circuits AC is connected to the telecommunications network CN. In picture 3, the external alarm circuits AC0 . . . . AC8 typically indicate a burglary, a fire or an alarm incident of a real estate technique surveillance system. Furthermore, two alarm circuits AC1 and AC2 have been reserved for the internal use of the terminal DTE. These internal alarm circuits are used for the surveillance of the terminal s DTE i.e. the alarm robot s own functions. For instance alarm circuit AC1 watches the battery charge and alarm circuit AC2 works as a Watch Dog as a so called reason watching circuit.

In figure 3 alarm circuit AC2 activates and as a consequence the terminal DTE choses for instance the number 040469, when the receiving system connected with the serial number in question receives data of an alarming alarm circuit AC2 on the basis of an alarming target (093 897 224, A-number) and a chosen serial number (040 469, B-number). On the basis of the data, the server AS connected to the receiving system can together with the database server DB form the alarming information and sends the data further to the organisation that serves terminals DTE. If the alarming terminal AC should for instance have been an alarming circuit taking up a crime alarm 1, the alarm would have been chosen to number 040 461 and the server AS should correspondingly have sent the data to a resposible guarding company.

The meanings of the alarming circuits AC naturally do not have to be the same in terminals DTE connected to different A-numbers. For instance in figure 3, the mobile station MS connected to the telecommunication network CN can in addition to normal voice traffic work as a security phone, wherein the alarming loops have been substituted with a telephone keyboard. A long touch on key 1 can mean start of work (selection 040 461), key 2 can mean end of work (selection 040 462) and key 3 can mean a risk situation (selection 040 463). The serve AS can send the data to the A-numebr 0400-601737 and on the basis of the B-number either to the work control system (selections 1 and 2) or to the alarm center (selection 3).

The alarm circuits can in accordance with the invention be arranged to control state changes of preselected systems. Many such systems exist, such as motor spaces, homes, work places etc.

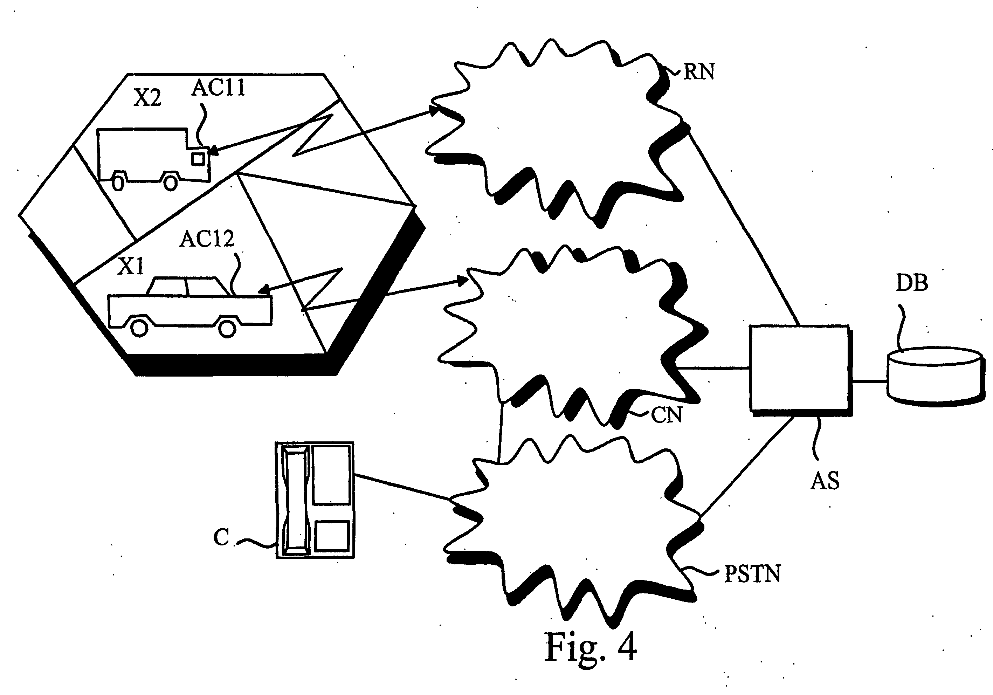

In figure 4 is presented a preferred embodiment that uses a solution according to the present invention in connection with mobile alarm and/or change of state information systems. In this example there is presented two mobile alarm circuits AC11 and AC12 and mobile terminals connected to said alarm circuits. The alarm circuit AC12 is connected to the taxicar in position X1 and alarm circuit AC11 is connected to the transport vehicle in position X2. Furthermore the system presented in figure 4 includes so called radio beacon network RN that is used for sending information to the mobile alarm circuits and/or receiving information from said mobile alarm circuits AC11, AC12. Furthermore in figure 4 is presented a customer C who is in connection to the incident server AC according to the present invention by the fixed network, for example public switched telephone network, PSTN.

The radio network comprises a set of radio beacons that can act in two directions, as a sending or receiving network element. A fixed radio beacon sends continuously location information that is received in the mobile alarm circuit AC11 or AC12. In practise the location information can be a number (B-number) that is called. When the alarm circuit AC has received the location information it mediates it automatically forward using the method and system according to the present invention. On the other hand, also the mobile alarm circuit can continuously send its location information signal and identity information whereupon the fixed radio beacon mediates the information using the number combining logic according to the present invention.

In the example of figure 4 the location information X1 of, for instance a car like a taxi, that is furnished with an alarm circuit AC12 and terminal DTE is received from a radio beacon as a certain B-number and is forwarded with the terminal DTE by using said B-number as a called number. Then the customer C who is calling from the area which corresponds the location X1 to the taxi ordering system can be connected directly to said taxi from where the location information is received via alarm circuit AC12. According to the same procedure, transport vehicle which has been furnished with alarm circuit AC11 and terminal DTE in location X2 can inform its location to the system.

In practise the location information system that has implemented according to the present invention means that each and every location district has an own number to which calling means this position. Thus a call from a certain A-subscriber to a certain B-subscriber number individualises the location of the calling terminal.

The invention is not only restricted to concern the above presented embodiment examples, since many variations are possible in the scope of the inventive idea defined by the patent claims.

## Claims

1. A method for the realization of an alarm system in a telecommunication system, the method comprising the steps of:
receiving an alarm from an alarm circuit (AC) to a terminal (DTE); and
forwarding the alarm from the terminal (DTE) to a server (AS) via a telecommunication network (CN),
**characterized in that** the method further comprises the steps of:
setting up a speech connection from the terminal (DTE) on the basis of an alarming alarm circuit (AC) to a predefined subscriber B number;
establishing the speech connection at the server (AS) to a selected subscriber ; and
individualizing the alarm at the server (AS) based on the A number of the network subscription of the terminal (DTE) and the dialled B number.

2. The method of claim 1, **characterized in that** the step of forwarding the alarm from the terminal (DTE) to a server (AS) via a telecommunication network (CN) comprises the step of:
forwarding state change information of the alarm circuit (AC) from the terminal (DTE) to the server (AS) via a telecommunication network (CN).

3. The method of claim 1 or 2, **characterized in that** the step of individualizing the alarm at the server (AS) comprises the step of:
individualizing a state change of the alarm circuit (AC) at the server (AS) with the A number of the network subscription of the terminal (DTE) and the dialled B number.

4. The method of claim 1, **characterized in that** the step of individualizing the alarm at the server (AS) comprises the step of:
individualizing the alarm circuit (AC) and the type of the alarm at the server (AS) with the A number of the network subscription of the terminal (DTE) and the dialled B number.

5. The method of claim 1, 2, 3 or 4, **characterized in that** the method further comprises the steps of:
sending an acknowledgement from the server (AS) to the terminal (DTE); and
receiving the acknowledgement of the connection set-up between the terminal (DTE) and the server (AS) at the terminal (DTE) from the server (AS).

6. The method of claim 1, 2, 3, 4 or 5, **characterized in that** the step of setting up a speech connection from the terminal (DTE) on the basis of an alarming alarm circuit (AC) to a predefined subscriber connection comprises the step of:
setting up said connection using a dual tone multi frequency selection.

7. The method of claim 1, 2, 3, 4, 5 or 6, **characterized in that** the step of setting up a speech connection from the terminal (DTE) on the basis of an alarming alarm circuit (AC) to a predefined subscriber connection comprises the step of:
setting up said connection using a pulse selection.

8. The method of claim 1, 2, 3, 4, 5, 6 or 7, **characterized in that** the method further comprises the steps of:
forwarding the alarm from the server (AS) to a database server (DB);
determining further information about the alarm on the basis of the A number and the B number of the alarming alarm circuit (AC); and
forwarding the further information of the alarm.

9. The method of claim 8, **characterized in that** the step of determining further information about the alarm on the basis of the A number and the B number of the alarming alarm circuit (AC) comprises the step of:
determining further information about at least one of the location of the alarm, the alarm type and the type of the state change.

10. The method of claim 1, 2, 3, 4, 5, 6, 7, 8 or 9, **characterized in that** the method further comprises the step of:
receiving the state change information from a mobile terminal (DTE).

11. A system for the realisation of an alarm system in a telecommunication system, which system comprises:
a telecommunication network (CN);
a terminal (DTE), which is connected to the telecommunication network (CN);
an alarm circuit (AC), which is connected to the terminal (DTE);
a server (AS), which is connected to the telecommunication network (CN); and
a database server (DB), which is connected to the server (AS),
**characterized in that** the system further comprises:
a generator (1) in the terminal (DTE) adapted to generate a called B-subscriber number on the basis of the alarming alarm circuit (AC); and
means (2) in the server (AS) adapted to individualize the alarm circuit (AC) based on the A number of the network subscription of the terminal and dialled B number identifying the location of the alarming alarm circuit and the type of the alarm.

12. The system of claim 11, **characterized in that** several alarm circuits (AC) are connected to said terminal (DTE).

13. The system of claim 11 or 12, **characterized in that** each alarming circuit (AC) is identified with an unambiguous B number.

14. The system of claim 11, 12 or 13, **characterized in that** said telecommunictaion network (CN) is one of the following: a public telephone network (PSTN), a digital multi-service network (ISDN), or a pan-European digital mobile system (GSM).

15. The system of claim 11, 12, 13 or 14, **characterized in that** said terminal (DTE) is a mobile station belonging to the pan-European digital mobile system (GSM).

## Patentansprüche

1. Verfahren zur Realisierung eines Alarmsystems in einem Telekommunikationssystern, wobei das Verfahren die Schritte beinhaltet:
Empfangen eines Alarms von einer Alarmschaltung (AC) für ein Endgerät (DTE); und
Weiterleiten des Alarms von dem Endgerät (DTE) über ein Telekommunikationsnetzwerk (CN) zu einem Server (AS),
**dadurch gekennzeichnet, dass** das Verfahren ferner die Schritte aufweist:
Erstellen einer Sprachverbindung von dem Endgerät (DTE) auf der Basis einer alarmierenden Alarmschaltung (AC) zu einer vorher festgelegten Teilnehmer-B-Nummer;
Einrichten der Sprachverbindung an dem Server (AS) zu einem ausgewählten Teilnehmer; und
Individualisieren des Alarms an dem Server (AS), basierend auf der A-Nummer der Netzwerkverbindung des Endgerätes (DTE) und der gewählten B-Nummer.

2. Verfahren nach Anspruch 1, **dadurch gekennzeichnet, dass** der Schritt des Weiterleitens des Alarms von dem Terminal (DTE) über ein Telekommunikationsnetzwerk (CN) zu einem Server (AS) den Schritt aufweist:
Weiterleiten der Information über die Zustandsänderung der Alarmschaltung (AC) von dem Endgerät (DTE) über ein Telekommunikationsnetzwerk (CN) zu dem Server (AS).

3. Verfahren nach Anspruch 1 oder 2, **dadurch gekennzeichnet, dass** der Schritt des Individualisierens des Alarms an dem Server (AS) den Schritt aufweist:
Individualisieren einer Zustandsänderung der Alarmschaltung (AC) an dem Server (AS) mit der A-Nummer der Netzwerkverbindung des Endgerätes (DTE) und der gewählten B-Nummer.

4. Verfahren nach Anspruch 1, **dadurch gekennzeichnet, dass** der Schritt des Individualisierens des Alarms an dem Server (AS) den Schritt aufweist:
Individualisieren der Alarmschaltung (AC) und des Typs des Alarms an dem Server (AS) mit der A-Nummer der Netzwerkverbindung des Endgerätes (DTE) und der gewählten B-Nummer.

5. Verfahren nach Anspruch 1, 2, 3 oder 4, **dadurch gekennzeichnet, dass** das Verfahren ferner die Schritte aufweist:
Senden einer Bestätigung von dem Server (AS) an das Endgerät (DTE); und
Empfangen der Bestätigung des Erstellens der Verbindung zwischen dem Endgerät (DTE) und dem Server (AS) am Endgerät (DTE) von dem Server (AS).

6. Verfahren nach Anspruch 1, 2, 3, 4 oder 5, **dadurch gekennzeichnet, dass** der Schritt des Erstellens einer Sprachverbindung von dem Endgerät (DTE) auf der Basis einer alarmierenden Alarmschaltung (AC) zu einer vorher festgelegten Teilnehmerverbindung den Schritt aufweist:
Erstellen der Verbindung durch Nutzen einer Zweiton-Vielfrequenzwahl.

7. Verfahren nach Anspruch 1, 2, 3, 4, 5 oder 6, **dadurch gekennzeichnet, dass** der Schritt des Erstellens einer Sprachverbindung von dem Endgerät (DTE) auf der Basis einer alarmierenden Alarmschaltung (AC) zu einer vorher festgelegten Teilnehmerverbindung den Schritt aufweist:
Erstellen der Verbindung durch Nutzen einer Pulswahl.

8. Verfahren nach Anspruch 1, 2, 3, 4, 5, 6 oder 7, **dadurch gekennzeichnet, dass** das Verfahren ferner die Schritte aufweist:
Weiterleiten des Alarms von dem Server (AS) zu einem Datenbankserver (DB);
Bestimmen von weiterer Information über den Alarm auf der Basis der A-Nummer und der B-Nummer der alarmierenden Alarmschaltung (AC); und
Weiterleiten von weiterer Information des Alarms.

9. Verfahren nach Anspruch 8, **dadurch gekennzeichnet, dass** der Schritt des Bestimmens weiterer Information über den Alarm auf der Basis der A-Nummer und der B-Nummer der alarmierenden Alarmschaltung (AC) den Schritt aufweist:
Bestimmen weiterer Information wenigstens einer entweder den Ort des Alarms, oder den Alarmtyp oder den Typ der Änderung des Zustands betreffend.

10. Verfahren nach Anspruch 1, 2, 3, 4, 5, 6, 7, 8 oder 9, **dadurch gekennzeichnet, dass** das Verfahren ferner den Schritt aufweist:
Empfangen der Änderung des Zustands der Information von einem mobilen Endgerät (DTE).

11. System zum Realisieren eines Alarmsystems in einem Telekommunikationssystem, wobei das System aufweist:
ein Telekommunikationsnetzwerk (CN);
ein Endgerät (DTE), welches mit dem Telekommunikationsnetzwerk (CN) verbunden ist;
eine Alarmschaltung (AC), welche mit dem Endgerät (DTE) verbunden ist;
einen Server (AS), welcher mit dem Telekommunikationsnetzwerk (CN) verbunden ist; und
einen Datenbankserver (DB), welcher mit dem Server (AS) verbunden ist,
**dadurch gekennzeichnet, dass** das System ferner aufweist:
einen Generator (1) in dem Terminal (DTE), welcher so adaptiert ist, dass er eine gerufene B-Teilnehmernummer auf der Basis der alarmierenden Alarmschaltung (AC) erzeugt; und
eine Vorrichtung (2) in dem Server (AS), welche so adaptiert ist, dass sie die Alarmschaltung (AC) basierend auf der A-Nummer der Netzwerkverbindung des Endgerätes und der gewählten B-Nummer individualisiert, welche den Ort der alarmierenden Alarmschaltung und den Typ des Alarms identifiziert.

12. System nach Anspruch 11, **dadurch gekennzeichnet, dass** verschiedene Alarmschaltungen (AC) mit dem Endgerät (DTE) verbunden sind.

13. System nach Anspruch 11 oder 12, **dadurch gekennzeichnet, dass** jede alarmierende Schaltung (AC) durch eine eindeutige B-Nummer identifiziert ist.

14. System nach Anspruch 11, 12 oder 13, **dadurch gekennzeichnet, dass** das Telekommunikationsnetzwerk (CN) eines der folgenden ist: ein öffentliches Telefonnetzwerk (PSTN), ein digitales Viele-Dienste-Netzwerk (ISDN) oder ein paneuropäisches digitales Mobilsystem (GSM).

15. System nach Anspruch 11, 12, 13 oder 14, **dadurch gekennzeichnet, dass** das Endgerät (DTE) ein Mobiltelefon ist, welches zu dem paneuropäischen Digitalmobilsystem (GSM) gehört.

## Revendications

1. Procédé de réalisation d'un système d'alarme dans un système de télécommunications, le procédé comprenant les étapes consistant à :
recevoir un signal d'alarme envoyé par un circuit d'alarme (AC) vers un terminal (DTE) ; et
transférer le signal d'alarme depuis le terminal (DTE) vers un serveur (AS) par le biais d'un réseau de télécommunications (CN),
**caractérisé en ce que** le procédé comprend en outre les étapes consistant à:
établir une connexion vocale à partir du terminal (DTE) sur la base d'un circuit d'alarme (AC) vers un numéro B d'abonné prédéfini ;
établir la connexion vocale au niveau du serveur (AS) vers un abonné sélectionné ; et
individualiser le circuit d'alarme au niveau du serveur (AS) sur la base du numéro A de l'abonnement au réseau du terminal (DTE) et du numéro B composé.

2. Procédé selon la revendication 1, **caractérisé en ce que** l'étape consistant à transférer le signal d'alarme depuis le terminal (DTE) vers un serveur (AS) par le biais d'un réseau de télécommunications (CN) comprend l'étape consistant à :
transférer des données de changement d'état du circuit d'alarme (AC) depuis le terminal (DTE) vers le serveur (AS) par le biais d'un réseau de télécommunications (CN).

3. Procédé selon la revendication 1 ou 2, **caractérisé en ce que** l'étape consistant à individualiser le circuit d'alarme au niveau du serveur (AS) comprend l'étape consistant à :
individualiser un changement d'état du circuit d'alarme (AC) au niveau du serveur (AS) sur la base du numéro A de l'abonnement au réseau du terminal (DTE) et du numéro B composé.

4. Procédé selon la revendication 1, **caractérisé en ce que** l'étape consistant à individualiser le circuit d'alarme au niveau du serveur (AS) comprend l'étape consistant à :
individualiser le circuit d'alarme (AC) et le type de circuit d'alarme au niveau du serveur (AS) sur la base du numéro A de l'abonnement au réseau du terminal (DTE) et du numéro B composé.

5. Procédé selon la revendication 1, 2, 3 ou 4, **caractérisé en ce que** le procédé comprend en outre les étapes consistant à :
envoyer un accusé de réception depuis le serveur (AS) vers le terminal (DTE) ; et
recevoir l'accusé de réception de l'établissement de la connexion entre le terminal (DTE) et le serveur (AS) au niveau du terminal (DTE) en provenance du serveur (AS).

6. Procédé selon la revendication 1, 2, 3, 4 ou 5, **caractérisé en ce que** l'étape consistant à établir une connexion vocale depuis le terminal (DTE) sur la base d'un circuit d'alarme (AC) vers une connexion d'abonné prédéfinie comprend l'étape consistant à :
établir ladite connexion en utilisant une sélection multifréquence à deux tonalités.

7. Procédé selon la revendication 1, 2, 3, 4,5 ou 6, **caractérisé en ce que** l'étape consistant à établir une connexion vocale depuis le terminal (DTE) sur la base d'un circuit d'alarme (AC) vers une connexion d'abonné prédéfinie comprend l'étape consistant à :
établir ladite connexion en utilisant une sélection à impulsions.

8. Procédé selon la revendication 1, 2, 3, 4, 5, 6 ou 7, **caractérisé en ce que** le procédé comprend en outre les étapes consistant à :
transférer le signal d'alarme depuis le serveur (AS) vers un serveur de base de données (DB) ;
déterminer des informations supplémentaires relatives au signal d'alarme sur la base du numéro A et du numéro B du circuit d'alarme (AC) ; et
transférer les informations supplémentaires relatives au signal d'alarme.

9. Procédé selon la revendication 8, **caractérisé en ce que** l'étape consistant à déterminer des informations supplémentaires relatives au signal d'alarme sur la base du numéro A et du numéro B du circuit d'alarme (AC) comprend l'étape consistant à :
déterminer des informations supplémentaires relatives à au moins un parmi la position du circuit d'alarme, le type de circuit d'alarme et le type de changement d'état.

10. Procédé selon la revendication 1, 2, 3, 4, 5, 6, 7, 8, ou 9, **caractérisé en ce que** le procédé comprend en outre l'étape consistant à :
recevoir les informations relatives au changement d'état en provenance d'un terminal mobile (DTE).

11. Système de réalisation d'un système d'alarme dans un système de télécommunications, le système comprenant :
un réseau de télécommunications (CN) ;
un terminal (DTE), qui est connecté au réseau de télécommunication (CN) ;
un circuit d'alarme (AC), qui est connecté au terminal (DTE) ;
un serveur (AS), qui est connecté au réseau de télécommunications (CN) ; et
un serveur de base de données (DB), qui est connecté au serveur (AS),
**caractérisé en ce que** le système comprend en outre :
un générateur (1) inclus dans le terminal (DTE), adapté pour générer un numéro d'abonné B composé sur la base du circuit d'alarme (AC) ; et
des moyens (2) inclus dans le serveur (AS), adaptés pour individualiser le circuit d'alarme (AC) sur la base du numéro A de l'abonnement au réseau du terminal et du numéro B composé identifiant la position du circuit d'alarme et du type d'alarme.

12. Système selon la revendication 11, **caractérisé en ce que** plusieurs circuits d'alarme (AC) sont connectés audit terminal (DTE).

13. Système selon la revendication 11 ou 12, **caractérisé en ce que** chaque circuit d'alarme (AC) est identifié par un numéro B absolument sans ambiguïté.

14. Système selon la revendication 11, 12 ou 13, **caractérisé en ce que** ledit réseau de télécommunications (CN) est un parmi les suivants : un réseau téléphonique public (PSTN), un réseau numérique multiservices (ISDN/RNIS), ou un système mobile numérique pan-européen (GSM).

15. Système selon la revendication 11, 12, 13 ou 14, **caractérisé en ce que** ledit terminal (DTE) est une station mobile appartenant au système de mobile numérique pan-européen (GSM).
